# EUROPÄISCHE PATENTSCHRIFT

(11) **EP 2 108 528 B1**
(45) Veröffentlichungstag und Bekanntmachung des Hinweises auf die Patenterteilung: **16.11.2011**
(21) Anmeldenummer: 09154949.3
(22) Anmeldetag: 12.03.2009
(51) Int. Cl.: B60C 11/00

(54) **Fahrzeugluftreifen**
Pneumatic tyres for a vehicle
Pneus de véhicule

(30) Priorität: 11.04.2008 DE 102008018346
(43) Veröffentlichungstag der Anmeldung: 14.10.2009
(73) Patentinhaber: Continental Reifen Deutschland GmbH, 30165 Hannover (DE)
(72) Erfinder: Weber, Christian, 30826 Garbsen (DE); Kramer, Thomas, 31832 Springe (DE); Carl, Wilfried, 12159 Berlin (DE); Haufe, Matthias, 31535 Neustadt (DE)
(74) Vertreter: Finger, Karsten

(56) Entgegenhaltungen:
- EP-A- 0 686 515
- JP-A- 2001 010 308

## Beschreibung

Die Erfindung betrifft einen Fahrzeugluftreifen, insbesondere für Nutzfahrzeuge, mit einer Radialkarkasse, einem mehrlagigen Gürtel und einem Laufstreifen, welcher im Boden berührenden Bereich einen mittleren Abschnitt aus einer ersten Gummizusammensetzung und zumindest einem Schulterabschnitt aus einer zweiten Gummizusammensetzung aufweist, wobei die Gummizusammensetzung im Schulterabschnitt eine höhere Abriebsbeständigkeit nach DIN 53516 aufweist als die Gummizusammensetzung im mittleren Abschnitt des Laufstreifens.

Ein derartiger Fahrzeugluftreifen ist aus der EP-B-0 686 515 bekannt. Um die Lebensdauer dieses für Sattelauflieger oder Anhänger, insbesondere auf deren hinteren Achsen, geeigneten Reifens zu erhöhen, ist vorgesehen, dass im Laufstreifen ein fahrzeugäußerer Streifen, der eine Breite zwischen 20 % und 25 % der gesamten Aufstandflächenbreite aufweist, aus einem Material besteht, das gemäß DIN 53516 höchstens 70 % des Abriebsvolumen zeigt wie jene Gummizusammensetzung, aus welcher der übrige Bereich der Lauffläche besteht. Die beiden Gummizusammensetzungen im Laufstreifen weisen daher einen hohen Unterschied in ihrer Abriebsbeständigkeit auf. Das hat Nachteile zur Folge, beispielsweise das Entstehen von Rippenabsenkungen.

Aus der DE-A-36 10 662 ist ein Fahrzeugluftreifen mit einem Laufstreifen bekannt, welcher in radialer Richtung aus mehreren Schichten unterschiedlicher Härte und/oder unterschiedlichen Abriebswiderstandes besteht, in der Weise, dass sich im Laufe der Abnutzung des Laufstreifens in der Lauffläche Streifen mit unterschiedlicher Griffigkeit ergeben.

Nutzfahrzeugreifen, die als Trailer-Reifen auf Anhängern eingesetzt werden, weisen insbesondere in Positionen auf der ersten und dritten Achse ein Abriebsbild auf, welches als "schräge Schulter" bekannt ist. Darunter versteht man einen unregelmäßigen Abrieb, derart, dass der Reifen an der Schulteraußenseite stärker abgenutzt wird als an der Schulterinnenseite. Dieses Abriebsbild entsteht bei Kurvenfahrten, vor Allem werden in engen Kurven die Reifen an der ersten und dritten Achse seitlich über die Fahrbahn geschoben, was zu dem erwähnten Abrieb in den Schulterbereichen führt.

Der Erfindung liegt die Aufgabe zugrunde, einen für Trailer-Achsen geeigneten Nutzfahrzeugreifen derart auszuführen, dass das Entstehen von "schrägen Schultern" deutlich reduziert wird, wobei die Verletzungsbeständigkeit und der Rollwiderstand des Laufstreifens nicht beeinträchtigt werden sollen.

Gelöst wird die gestellte Aufgabe erfindungsgemäß dadurch, dass die Gummizusammensetzung in den Schulterabschnitten eine um 5 % bis 30 % höhere Abriebsbeständigkeit aufweist als die Gummizusammensetzung im mittleren Abschnitt des Laufstreifens.

Es hat sich herausgestellt, dass ein relativ geringer Unterschied in der Abriebsbeständigkeit der Gummizusammensetzungen in den Schulterabschnitten und im mittleren Abschnitt des Laufstreifens ausreicht, um die Ausbildung von "schrägen Schultern" deutlich zu reduzieren. Der geringe Unterschied in der Abriebsbeständigkeit trägt dazu bei, dass die Ausbildung von Rippenabsenkungen vermindert wird.

Gemäß der Erfindung ist es für eine deutliche Reduktion des Abriebbildes "schräge Schultern" bereits ausreichend, wenn die Gummizusammensetzung im

Schulterabschnitt eine um bis zu 15% höhere Abriebsbeständigkeit aufweist als die Gummizusammensetzung im mittleren Abschnitt.

In den erfindungsgemäß ausgeführten Laufstreifen von Nutzfahrzeugreifen werden die Gummizusammensetzungen derart ausgelegt, dass die Gummizusammensetzung im Schulterabschnitt einen Abrieb gemäß DIN 53516 von 65 mm³ bis 95 mm³ und die Gummizusammensetzung im mittleren Abschnitt des Laufstreifens einen Abrieb gemäß DIN 53516 von 85 mm³ bis 120 mm³ aufweist.

Erfindungsgemäß ausgeführte Laufstreifen können ferner mehrschichtig ausgeführt sein, wobei in diesem Fall zumindest die radial äußerste Schicht in Abschnitte geteilt ist, deren Gummizusammensetzungen erfindungsgemäß ausgeführt sind. Die an die radial äußerste Schicht anschließende Schicht kann dabei aus einer Gummizusammensetzung bestehen, die jener des mittleren Abschnittes der radial äußersten Schicht entspricht. Besonders vorteilhaft für einen gleichmäßigen Laufstreifenabrieb über die Lebensdauer des Reifens ist es, wenn der bzw. die Schulterabschnitte in radialer Richtung mehrschichtig ausgeführt ist bzw. sind, wobei die Schicht mit dem geringsten Abrieb die äußerste Schicht ist und die Abriebsbeständigkeit in der beziehungsweise den weiteren Schichten von radial außen nach radial innen abnimmt.

Weitere Merkmale, Vorteile und Einzelheiten der Erfindung werden nun anhand der Zeichnung, die schematisch Ausführungsbeispiele darstellt, näher beschrieben. Dabei zeigen

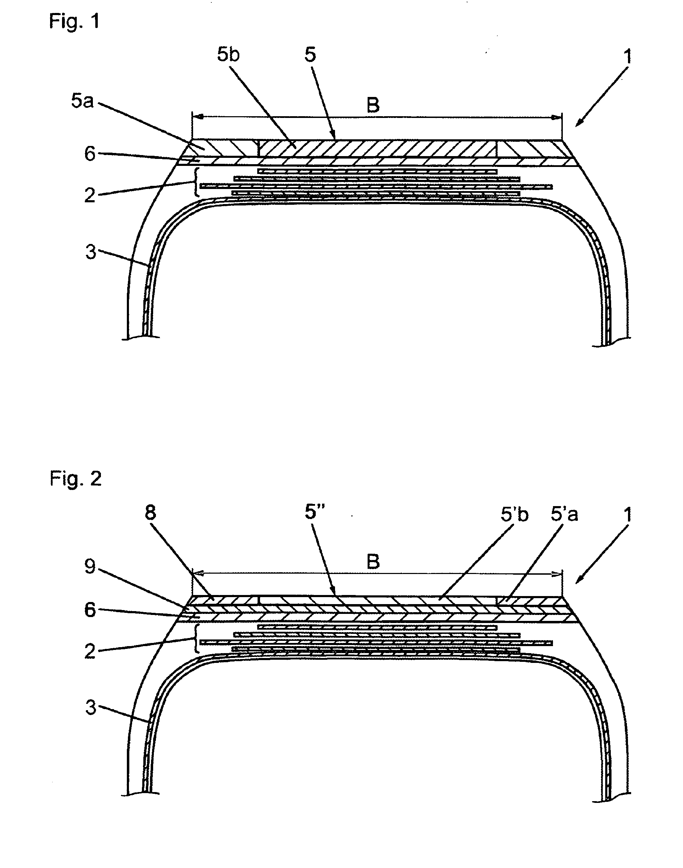

Fig. 1 und Fig. 2 unterschiedliche Ausführungsformen der Erfindung anhand von Querschnitten durch einen Fahrzeugluftreifen im Bereich des Laufstreifens.

Die beiden Figuren zeigen jeweils vereinfacht den Querschnitt durch die Laufstreifenbereiche von Luftreifen für Nutzfahrzeuge, wobei von den üblichen Bauteilen des Reifens ein Laufstreifen 1, ein Gürtel 2 bestehend aus vier Gürtellagen mit in Gummi eingebetteten, vorzugsweise aus Stahl bestehenden Festigkeitsträgern, und eine ebenfalls mit Festigkeitsträgern verstärkte Radialkarkasse 3 dargestellt sind. Von den Seitenwänden des Reifens sind lediglich die beiden radial äußeren Endabschnitte gezeigt. Nicht dargestellt sind Wulstbereiche mit Wulstkernen, Kernprofilen und sonstigen Wulstbauteilen.

Bei beiden Ausführungsvarianten ist der Laufstreifen 1 in bekannter Weise in einen Laufstreifenoberteil 5 (Fig. 1) sowie 5' (Fig. 2) und einen Laufstreifenunterteil 6 geteilt. Der Laufstreifenunterteil 6 kann herkömmlich ausgeführt sein und jeweils eine im Wesentlichen konstante Stärke in der Größenordnung von 2 mm bis 3 mm aufweisen und aus einer der für Laufstreifenunterteile von Nutzfahrzeugreifen üblichen Gummizusammensetzungen bestehen. Der Laufstreifenoberteil 5, 5' ist jener Teil des Laufstreifens 1, welcher mit einer in den Figuren nicht gezeigten Profilierung aus Umfangsnuten, Quernuten, Einschnitten und dergleichen versehen ist. Die Breite B kennzeichnet jeweils jenen Bereich des Laufstreifens 1, welcher beim Abrollen des Reifens (unter den in den E.T.R.T.O. Standards genormten Bedingungen) mit dem Untergrund in Kontakt kommt. Der Laufstreifenoberteil 5, 5' weist insgesamt eine Dicke in der Größenordnung von 12 mm bis 24 mm auf, je nach Dimension und Einsatzzweck des Nutzfahrzeugreifens.

Bei der in Fig. 1 gezeigten Ausführungsvariante besteht der Laufstreifenoberteil 5 aus zwei in Umfangsrichtung umlaufenden Schulterabschnitten 5a, welche aus einer ersten Kautschukmischung erstellt sind, und einem mittleren Abschnitt 5b, welcher aus einer zweiten Kautschukmischung erstellt ist. Die beiden Schulterabschnitte 5a, welche insbesondere übereinstimmende Breiten von jeweils 10 % bis 20 % der Laufstreifenbreite B aufweisen, bestehen aus einer abriebsbeständigeren Gummizusammensetzung als der mittlere Abschnitt 5a, welcher sich zwischen den beiden Schulterabschnitten 5b befindet. Maß für die Abriebsbeständigkeit ist dabei der gemäß DIN 53516 ermittelte Abrieb, welcher für die Gummizusammensetzung in den Schulterabschnitten 5b zwischen 65 mm³ und 95 mm³ beträgt, für die Gummizusammensetzung im mittleren Abschnitt 5a zwischen 85 mm³ und 120 mm³. Die beiden Gummizusammensetzungen in den Schulterabschnitten 5b und im mittleren Abschnitt 5a sind derart aufeinander abgestimmt, dass die Abriebsbeständigkeit der Gummizusammensetzung in den Schulterabschnitten 5b zwischen 5 % und 30 % höher ist, insbesondere bis zu 15 %, als die Abriebsbeständigkeit der Gummizusammensetzung im mittleren Abschnitt 5a.

Bei der in Fig. 2 gezeigten Ausführungsvariante besteht der Laufstreifenoberteil 5' in radialer Richtung aus zwei, insbesondere übereinstimmend dick ausgeführten Schichten 8 und 9. Die Schicht 9 schließt unmittelbar an den Laufstreifenunterteil 6 an und erstreckt sich über die gesamte Laufstreifenbreite. Die zweite, radial äußere Schicht 8 ist, analog zum Laufstreifenoberteil 5 der Ausführungsform gemäß Fig. 1, in zwei Schulterabschnitte 5'a und einen mittleren Abschnitt 5'b geteilt. Der mittlere Abschnitt 5'a weist, ebenfalls analog zur Ausführungsform gemäß Fig. 1, einen DIN Abrieb von 85 mm³ bis 120 mm³ auf, der DIN-Abrieb in den beiden Schulterabschnitten 5'b beträgt, analog zu Fig. 1, zwischen 65 mm³ und 95 mm³. Die Gummizusammensetzung in der radial inneren Schicht 9 des Laufstreifenoberteils 5' entspricht vorzugsweise jener im mittleren Abschnitt 5'b der Schicht 8. Die Schulterabschnitte 5'a können in radialer Richtung mehrschichtig aufgebaut sein, wobei die Mischung/Schicht mit dem geringsten DIN Abrieb radial außen liegt und die DIN-Abriebsbeständigkeit von außen nach innen abnimmt.

Tabelle 1 enthält zwei Mischungsbeispiele B1 und B2 für die Schulterabschnitte 5a, 5'a sowie zwei Beispiele B4 und B5 für den mittleren Abschnitt 5b, 5'b. Mit vulkanisierten Prüfkörpern wurde der Abrieb gemäß DIN 53516 ermittelt.

**Tabelle 1:**

| **Bestandteile** | **B1 Anteile in phr** | **B2 Anteile in phr** | **B3 Anteile in phr** | **B4 Anteile in phr** |
|---|---|---|---|---|
| NR | 90 | 82,5 | 100 | 95 |
| BR (hoch cis) | 10 | 10 | | 5 |
| SSBR (Calprene 1204) | | 7,5 | | |
| Ruß N220 | 50 | 50 | 48 | 48 |
| Weichmacher | 3 | 3 | 3 | 3 |
| Alterungsschutzmittel | In den üblichen Mengen | | | |
| Zinkoxid | | | | |
| Stearinsäure | | | | |
| Beschleuniger (CBS) | 1 | 1 | 0,8 | 0,9 |
| Schwefel | 1,65 | 1,65 | 1,7 | 1,65 |
| | | | | |
| **DIN-Abrieb, mm³** | **87** | **81** | **111** | **98** |

Die in der Tabelle angegeben Anteile der einzelnen Bestandteile der Mischungen sind Gewichtteile (phr), die jeweils auf 100 Gewichtsteile Kautschuk in der Mischung bezogen sind.

Nutzfahrzeugreifen mit erfindungsgemäß ausgeführten Laufstreifen weisen bei ihrem bevorzugten Einsatz an ungelenkten Anhängerachsen von Sattelzügen ein wesentlich gleichmäßigeres Abriebsbild auf als vergleichbare Reifen aus dem Stand der Technik. Insbesondere lässt sich die Ausbildung von so genannten "schrägen Schultern" deutlich reduzieren, wobei die Entstehung anderer Varianten von unregelmäßigem Abrieb vermieden werden kann.

Die Erfindung ist auf die dargestellten beschriebenen Ausführungsformen nicht eingeschränkt. Ein erfindungsgemäß ausgeführter Reifen kann auch einen Laufstreifen aufweisen, welcher keinen Laufstreifenunterteil, wie beschrieben, aufweist. Des Weiteren ist es möglich, lediglich in jener Schulter, die nach der Montage des Reifens am Fahrzeug außen liegt und deren Belastung bei Kurvenfahrten etwas größer ist als auf der Innenseite, einen Schulterabschnitt aus der abriebsbeständigeren Gummizusammensetzung vorzusehen.

### Bezugsziffernliste

- 1 .....: Laufstreifen
- 2 .....: Gürtel
- 3 .....: Radialkarkasse
- 5 .....: Laufstreifenoberteil
- 5' .....: Laufstreifenoberteil
- 5a .....: mittlerer Abschnitt
- 5b .....: Schulterabschnitt
- 5'a .....: mittlerer Abschnitt
- 5'b .....: Schulterabschnitt
- 6 .....: Laufstreifenunterteil
- 8 .....: Schicht
- 9 .....: Schicht

## Patentansprüche

1. Fahrzeugluftreifen, insbesondere für Nutzfahrzeuge, mit einer Radialkarkasse (3), einem mehrlagigen Gürtel (2) und einem Laufstreifen (1), welcher im Boden berührenden Bereich einen mittleren Abschnitt (5b, 5'b) aus einer ersten Gummizusammensetzung und zumindest einen Schulterabschnitt (5a, 5'a) aus einer zweiten Gummizusammensetzung aufweist, wobei die Gummizusammensetzung im Schulterabschnitt (5a, 5'a) eine höhere Abriebsbeständigkeit nach DIN 53516 aufweist als die Gummizusammensetzung im mittleren Abschnitt (5b, 5'b) des Laufstreifens (1), **dadurch gekennzeichnet,**
**dass** die Gummizusammensetzung im Schulterabschnitt (5a, 5'a) eine um 5 bis 30% höhere Abriebsbeständigkeit aufweist als die Gummizusammensetzung im mittleren Abschnitt (5b, 5'b) des Laufstreifens.

2. Fahrzeugluftreifen nach Anspruch 1, **dadurch gekennzeichnet, dass** die Gummizusammensetzung im Schulterabschnitt (5a, 5'a) eine um bis zu 15% höhere Abriebsbeständigkeit aufweist als die Gummizusammensetzung im mittleren Abschnitt (5b, 5'b).

3. Fahrzeugluftreifen nach Anspruch 1 oder 2, **dadurch gekennzeichnet, dass** die Gummizusammensetzung im Schulterabschnitt (5a, 5'a) einen Abrieb gemäß DIN 53516 von 65 mm³ bis 95 mm³ aufweist.

4. Fahrzeugluftreifen nach Anspruch 1 oder 2, **dadurch gekennzeichnet, dass** die Gummizusammensetzung im mittleren Abschnitt (5b, 5'b) einen Abrieb gemäß DIN 53516 von 85 mm³ bis 120 mm³ aufweist.

5. Fahrzeugluftreifen nach einem der Ansprüche 1 bis 4, **dadurch gekennzeichnet, dass** der Laufstreifen (1) - abgesehen von einem gegebenenfalls vorgesehenen Laufstreifenunterteil (6) - aus zumindest zwei Schichten (8, 9) besteht, von welchen die radial äußerste den Schulterabschnitt (5a, 5'a) und den mittleren Abschnitt (5b, 5'b) aufweist.

6. Fahrzeugluftreifen nach Anspruch 5, **dadurch gekennzeichnet, dass** die an die radial äußerste Schicht (8) anschließende Schicht (9) aus einer Gummizusammensetzung besteht, die jener des mittleren Abschnittes (5'b) der radial äußersten Schicht (8) entspricht.

7. Fahrzeugluftreifen nach Anspruch 1 bis 6, **dadurch gekennzeichnet, dass** der Schulterabschnitt (5a, 5'a) in radialer Richtung mehrschichtig ausgeführt ist, wobei die Schicht mit dem geringsten Abrieb gemäß DIN 53516 die äußerste Schicht ist und die Abriebsbeständigkeit in der beziehungsweise den weiteren Schicht(en) von radial außen nach radial innen abnimmt.

## Claims

1. Pneumatic vehicle tyre, in particular for commercial vehicles, with a radial carcass (3), a multi-ply breaker belt (2) and a tread rubber (1), which has in the region that makes contact with the ground a middle portion (5b, 5'b) of a first rubber composition and at least one shoulder portion (5a, 5'a) of a second rubber composition, the rubber composition in the shoulder portion (5a, 5'a) having a higher abrasion resistance as defined by DIN 53516 than the rubber composition in the middle portion (5b, 5'b) of the tread rubber (1), **characterized in that** the rubber composition in the shoulder portion (5a, 5'a) has an abrasion resistance that is 5 to 30% higher than the rubber composition in the middle portion (5b, 5'b) of the tread rubber.

2. Pneumatic vehicle tyre according to Claim 1, **characterized in that** the rubber composition in the shoulder portion (5a, 5'a) has an abrasion resistance that is up to 15% higher than the rubber composition in the middle portion (5b, 5'b).

3. Pneumatic vehicle tyre according to Claim 1 or 2, **characterized in that** the rubber composition in the shoulder portion (5a, 5'a) has an abrasion as defined by DIN 53516 of 65 mm³ to 95 mm³.

4. Pneumatic vehicle tyre according to Claim 1 or 2, **characterized in that** the rubber composition in the middle portion (5b, 5'b) has an abrasion as defined by DIN 53516 of 85 mm³ to 120 mm³.

5. Pneumatic vehicle tyre according to one of Claims 1 to 4, **characterized in that** - apart from a possibly provided lower tread rubber part (6) - the tread rubber (1) consists of at least two layers (8, 9), of which the radially outermost layer has the shoulder portion (5a, 5'a) and the middle portion (5b, 5'b).

6. Pneumatic vehicle tyre according to Claim 5, **characterized in that** the layer (9) adjoining the radially outermost layer (8) consists of a rubber composition which corresponds to that of the middle portion (5'b) of the radially outermost layer (8).

7. Pneumatic vehicle tyre according to Claims 1 to 6, **characterized in that** the shoulder portion (5a, 5'a) is of a multilayered configuration in the radial direction, the layer with the lowest abrasion as defined by DIN 53516 being the outermost layer and the abrasion resistance decreasing in the further layer or layers from the outside inwards in the radial sense.

## Revendications

1. Bandage pneumatique pour roue de véhicule, en particulier pour véhicule utilitaire, le bandage étant doté d'une carcasse radiale (3), d'une ceinture (2) en plusieurs couches et d'une bande de roulement (1) qui présente dans sa partie en contact avec le sol une partie centrale (5b, 5'b) constituée d'une première composition de caoutchouc et au moins une partie d'épaulement (5a, 5'a) constituée d'une deuxième composition de caoutchouc,
la composition de caoutchouc de la partie d'épaulement (5a, 5'a) présentant une résistance à l'abrasion selon DIN 53516 plus élevée que la composition de caoutchouc de la partie centrale (5b, 5'b) de la bande de roulement (1),
**caractérisé en ce que**
la résistance à l'abrasion de la composition de caoutchouc de la partie d'épaulement (5a, 5'a) est supérieure de 5 à 30 % à celle de la composition de caoutchouc de la partie centrale (5b, 5'b) de la bande de roulement.

2. Bandage pneumatique pour roue de véhicule selon la revendication 1, **caractérisé en ce que** la résistance à l'abrasion de la composition de caoutchouc de la partie d'épaulement (5a, 5'a) est de 15 % supérieure à celle de la composition de caoutchouc de la partie centrale (5b, 5'b).

3. Bandage pneumatique pour roue de véhicule selon les revendications 1 ou 2, **caractérisé en ce que** l'abrasion selon DIN 53516 de la composition de caoutchouc de la partie d'épaulement (5a, 5'a) est de 65 mm³ à 95 mm³.

4. Bandage pneumatique pour roue de véhicule selon les revendications 1 ou 2, **caractérisé en ce que** l'abrasion selon DIN 53516 de la composition de caoutchouc de la partie d'épaulement (5b, 5'b) est de 85 mm³ à 120 mm³.

5. Bandage pneumatique pour roue de véhicule selon l'une des revendications 1 à 4, **caractérisé en ce que**, compte non tenu d'une sous-partie (6) de bande de roulement également prévue, la bande de roulement (1) est constituée d'au moins deux couches (8, 9) parmi lesquelles la partie située radialement à l'extérieur présente la partie d'épaulement (5a, 5'a) et la partie centrale (5b, 5'b).

6. Bandage pneumatique pour roue de véhicule selon la revendication 5, **caractérisé en ce que** la couche (9) qui se raccorde à la couche (8) située radialement à l'extérieur est constituée d'une composition de caoutchouc qui correspond à celle de la partie centrale (5'b) de la partie (8) située radialement à l'extérieur.

7. Bandage pneumatique pour roue de véhicule selon les revendications 1 à 6, **caractérisé en ce que** la partie d'épaulement (5a, 5'a) est constituée de plusieurs couches dans la direction radiale, **en ce que** la couche dont l'abrasion selon DIN 53516 est la plus basse est la couche extérieure et **en ce que** la résistance à l'abrasion de la ou des autres couches diminue radialement de l'extérieur à l'intérieur.
